Europäisches Patentamt

(19) European Patent Office

Office européen des brevets

(11) Publication number: **0 034 416**
**B1**

(12) **EUROPEAN PATENT SPECIFICATION**

(45) Date of publication of patent specification: **16.01.85**

(51) Int. Cl.⁴: **B 01 D 29/16** // B01D29/38

(21) Application number: **81300318.3**

(22) Date of filing: **23.01.81**

(54) Backflushable fluid filter.

(30) Priority: **24.01.80 US 114736**

(43) Date of publication of application:
**26.08.81 Bulletin 81/34**

(45) Publication of the grant of the patent:
**16.01.85 Bulletin 85/03**

(84) Designated Contracting States:
**BE DE FR GB IT NL SE**

(56) References cited:
**EP-A-0 003 959**
**GB-A- 880 427**
**GB-A-1 400 452**
**US-A-2 970 699**
**US-A-2 973 828**
**US-A-3 242 656**
**US-A-3 807 150**

(73) Proprietor: **BRUNSWICK CORPORATION**
**One Brunswick Plaza**
**Skokie Illinois 60077 (US)**

(72) Inventor: **Schaeffer, John I**
**400 Foothill Farms Road**
**Orange City Florida 32763 (US)**

(74) Representative: **Allden, Thomas Stanley et al**
**A.A. THORNTON & CO. Northumberland House**
**303-306 High Holborn**
**London WC1V 7LE (GB)**

Courier Press, Leamington Spa, England.

## Description

This invention relates to backflushable fluid filters.

In US—A—3,994,810, a backflushable filter unit having a plurality of filter elements is taught. The filter elements therein are depicted as being cylindrical with pleated filter media being secured to the end caps of the filter elements. The preferred filter media for filtering polymers is mentioned as a metal fibre depth filter media wherein the metal fibres have a diameter from about 0.000001 m (1 micron) to about 0.00005 m (50 microns) and the media is sintered.

Generally, in the operation of filter units and including backflushable units, the flow of contaminated fluid is usually from outside the filter element into the centre of the element and then out through the centre of the filter housing. However, in backflushable filter units, the flow is preselectedly reversed so that some of the cleaned fluid is used for flowing from inside the filter element to its outside thereby cleaning the filter media.

In such backflushable filter units, the filters are on-stream filtering for a preselected period of time and then selectively switched off-stream either individually or in pairs being cleaned for a preselected period of time. The cleaning period or time required to clean the filters is dependent upon:

(1) How dirty the filters are;
(2) The type of fluid in the system;
(3) The type of contaminants;
(4) The amount of pressure drop in the device; and
(5) The desired level of cleanness.

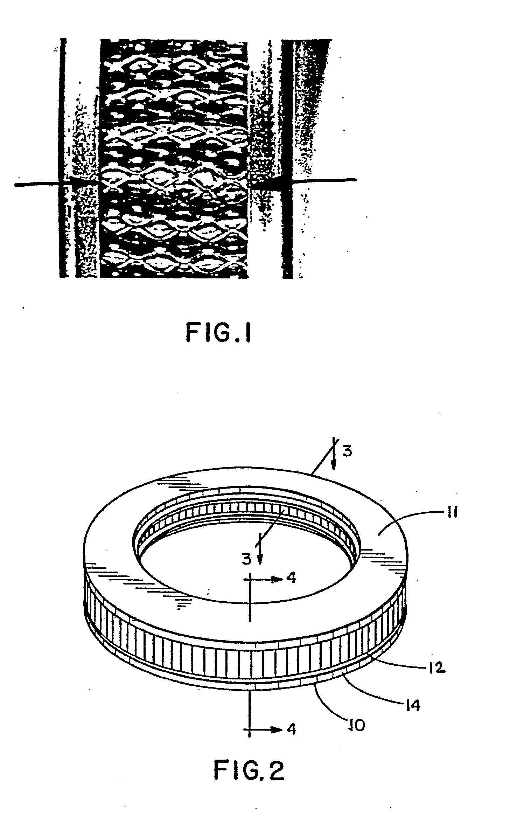

The filtering and cleaning causes the pleated filter media of the filter elements to be subjected to a cyclic pressure effect. It has been found that under certain circumstances, such as a high differential pressure across the filter media and a high viscosity liquid being filtered, that the crowns of the pleats of some of the elements in a backflushable unit were cracking or splitting such as depicted in the photograph of Figure 1.

It was initially believed that this splitting of the crowns was due to failure of the fastening means that was used at attach the plated filter media to the end caps. A number of such filter elements were made in accordance with US—A—4,169,059 wherein a metal fibre web is used as the means for bonding the filter media to the end caps. An extensive evaluation of a plurality of such filter elements, such as those depicted in Figure 1, indicated that the bonding means for securing the pleated filter media to the end caps was fully intact. Therefore, bonding failure was not the cause of the splitting of the crowns, and the obvious solution of making the bond stronger would not prevent the splitting.

Thus, recognition of the splits in the crowns and the review of the prior art did not lead one to any conclusion as to how to solve the splitting problem.

EP—A—0,003,959 highlights the problem of the collapse or rupture of the corrugation folds of a corrugated tubular filter element of a weak, non-metallic material when subjected to a high differential pressure across the filter material caused by the pores thereof plugging up from impurities collected during filtration. To solve that problem the corrugation folds are arranged in groups, and triangular solid wedges are wedged between such groups so that the folds in the individual groups are forced against one another in supporting contact, by which they cannot flex or collapse. However, in so doing, the advantage afforded by a corrugated filter element of a relatively large filtration area is lost and, moreover, the wedged together folds would add resistance to the path of flow thereby themselves undesirably increasing the differential pressure. The EP—A—0,003,959 is clearly not concerned with the problem of splitting of the crowns of a pleated, metal filter media of a truly backflushable filter unit.

An air filter is disclosed in US—A—3,807,150 in which a toroidal filter element is formed of a transversely pleated fibreglass web which is not self supporting so that spacers having transverse corrugations are placed between the pleats to space them apart. The spacers may be elongated strips of light metal or of wood or plastic. The US—A—3,807,150 does not address itself to the problem with which the present invention is concerned, namely the splitting of the crowns of a metal filter element of a backflushable filter.

The invention as claimed provides a solution to the problem of how to design a filter which is subjected to repeated cycles of filtering and backflushing such as to reduce the incidence of failure of the filter, caused by splitting of the crowns of its pleats. To that end the invention provides a means for inhibiting diaphragmic movement of the pleats, it being that movement which it is believed weakens the crowns and causes them to split when a high fluid pressure differential is applied across the filter media. An advantage afforded by the invention is that the means which serves to inhibit diaphragmic movement of the pleats does not adversely affect the filtering efficiency of the filter media.

In order that the invention may be well understood there will now be described some embodiments thereof given by way of example reference being had to the accompanying drawings, in which:

Figure 1 is a photographic representation of a partial segment of a prior art filter element depicting a split crown indicated by opposing arrows;

Figure 2 is a perspective view of one style of filter element that can be used in a backflushable filter unit;

Figure 3 is a cross-sectional view taken along lines 3—3 of Figure 2 comprising a portion of the prior art filter element;

Figure 4 is a cross-sectional view taken along line 4—4 of Figure 2 indicating the location of the filter media and filter end caps;

Figure 5 is a partial cross-sectional view taken along line 3—3 and represents the prior art filter element during its normal filtering cycle and depicting the filter media bellowing or ballooning inwardly toward the centre of the filter;

Figure 6 is a partial cross-sectional view taken along line 3—3 of Figure 2 and represents the prior art filter during a backflushing portion of a cycle depicting the filter media as slightly bellowing or ballooning outwardly;

Figure 7 is a perspective view of a wedge as described herein;

Figure 7A is a perspective view of a shim as described herein;

Figure 8 is a perspective view of a wedge as described herein;

Figure 9 is a perspective view of a shim as described herein;

Figure 10 is a fragmentary cross-sectional view of a filter embodying the invention;

Figure 11 is a cross-sectional view of an alternative filter embodying the invention;

Figure 12 is a cross-sectional view of a filter element containing an embodiment of the invention described herein;

Figure 13 is a cross-sectional view of a filter element containing an embodiment of the invention described herein; and

Figure 14 is a side elevation view of a wedge in comb shape as described herein.

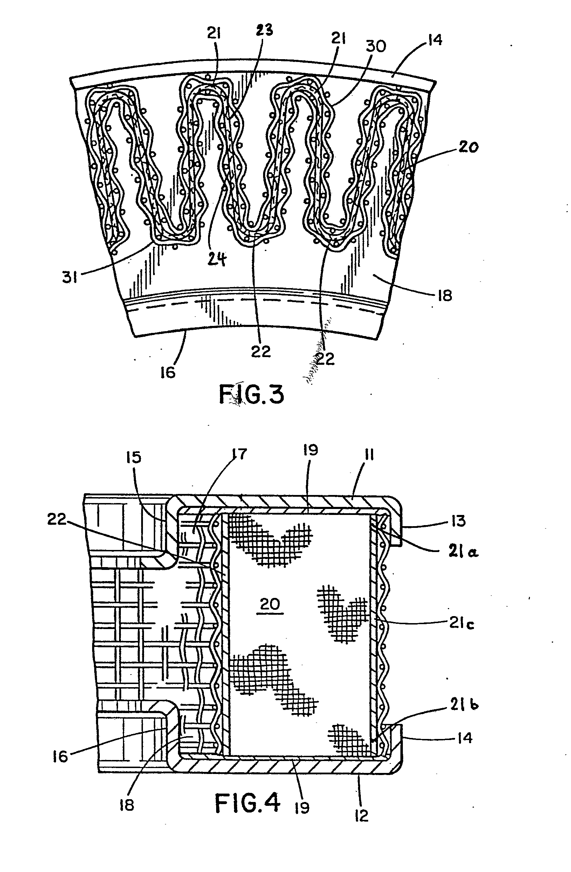

A small perspective representation of a filter element is shown in Figure 2 with Figure 3 depicting a segment of the lower portion of the filter element of Figure 2 taken along line 3—3. A filter media 20 has axially extending pleats 27 with laterally outwardly directed crowns 21 and laterally inwardly directed apexes 22. The filter media 20 is secured at the opposite ends of the pleats 27 to end caps 11 and 12 by bonding means 19 such as taught in US—A—4,114,794. The upper end cap 11 has a forward lip 13 and an inner lip 15 with a gap 17 between the apexes 22 and the lip 15. The lower cap 12 has a forward lip 14 and an inner lip 16 with a gap 18 between the apex 22 and the lip 16. The crowns 21 are extremely close to the forward lips 13 and 14 and in some instances when the bonding means 19 actually falls over the edge of the lip the very top and bottom edges of the crowns 22 can be secured at 21a and 21b respectively. The filter element 10 will be of any size compatible with the filter housing used to hold it.

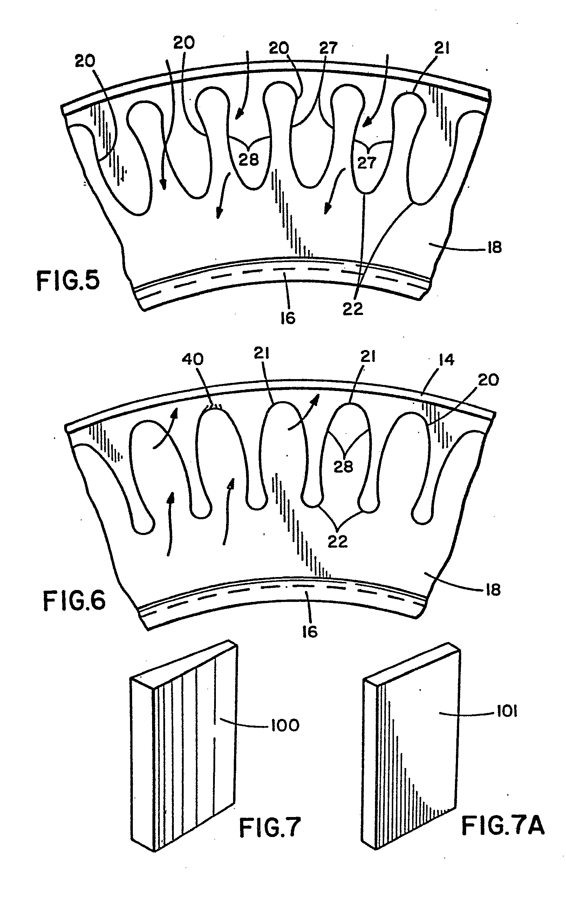

It was found after the invention herein that when the filter element 10 is normally filtering in a backflushable filter unit such as that taught by US—A—3,994,810 that the filter media 20 appears to balloon slightly inward such as shown in Figure 5. In fact, in a backflushable unit where fluid is forced both ways through the filter media, it is thought that such filter media pleats 27 acts as diaphragms wherein the adjacent pleats (those separated by apexes 22) are forced apart during the normal filtering cycle. The arrows in Figure 5 represent the fluid flowing through the filter media. When the flow is reversed and the filter is being backflushed or cleaned, the filter media pleats 27 (again those separated by apexes 22) are forced together such as shown in Figure 6; the arrows indicating the path of the flow of the fluid. Thus, the filtering and backflushing cycle causes the pleats 27 to move in and out, mostly at their centre 28, in a diaphragmic movement without breaking their seal with the bonding means to the end caps. The top crown edges 21a and bottom crown edges 21b are restricted from movement due to the relative closeness to and support provided by the lips 13 and 14. It is therefore believed that the location of maximum stress due to this diaphragmic movement is located in the intermediate region of the crowns 21 and possibly at the centre 21c. This diaphragmic movement seems to prematurely cause one or more of the crowns to split open when the fluid passing through the filter unit has a high viscosity and there is a high pressure drop across the filter material. The photograph of Figure 1 depicts a portion of part of a filter element used in a backflushable filter unit such as the backflushable unit shown in US—A—3,994,810. A cross-sectional view of a split crown 21 similar to that shown in Figure 1 is shown in Figure 6 at 40. When this split occurs, the filter unit becomes inoperable because contaminated fluid can pass through this breach without being filtered. It has been ascertained that the splitting crowns will occur more when fluid having a viscosity of approximately 100 Pa.s (1000 poise) or more is being filtered and the pressure drop across the filter media is about 0.0292 Kg.m (100 psia) or more.

In a typical construction of the backflushable element 10 as shown in partial cross-section in Figure 3 the filter media 20 can be made from a metal fibre web material that is sintered. This filter media 20 may be faced on its outer surface 23 by an outer metal wire screen 30. Sometimes, the media 20 may also be faced on the inner surface 24 by a metal wire screen 31. These wire screens 30 and 31 are sinter bonded to the filter media 20 and are generally lightweight metal screens; typically, these screens are 24×24 woven mesh made of 0.00027 m (11 mil) wire, 16×16 woven mesh made of 0.0045 m (18 mil) wire and 10×10 woven mesh made from 0.00063 m (25 mil) wire. Expanded metal sheets having a thickness of from about 0.00051 m (20 mils) to about 0.00076 m (30 mils) may be substituted for the metal woven wire mesh. The size of the mesh or expanded metal is predicated on (1) on the size of the filter element (2) the number of pleats of the element and (3) the size of a pleat in order to be compatible therewith.

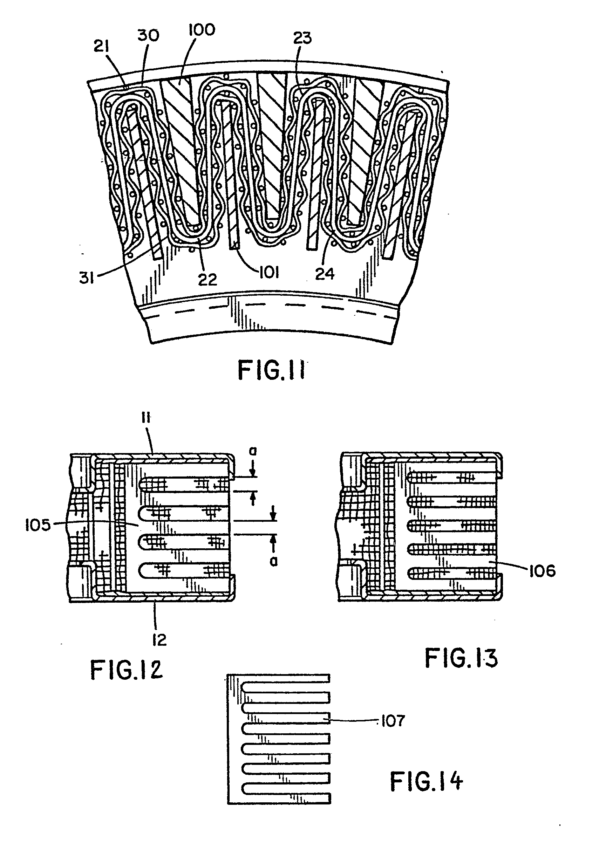

Quite surprisingly, it has been found as a preferred embodiment of the invention that an antibellowing means that prevents the diaphragmic movement of the pleats comprises three-dimensional wedges 100 or shims 101 placed adjacent the outer surface 23 of the media 20. A wedge 100 is depicted in Figure 7 and a shim 101 is depicted in Figure 7A. In Figure 11, the wedges 100 are shown mounted between the adjacent outer side surfaces of adjacent pleats 27, although the shims 101 can be substituted therefor. It has been found desirable to have the metal wire screen 30 exterior to the outer surface 23 of the media 20. The screen 30 provides a three-dimensional structure on the exterior of the surface 23 with the woven characteristics of the screen providing a flow path between the wedges 100 and the outer surface 23. The wedges control and substantially reduce the outer movement of the media 20, and more particularly, prevent outward movement of the pleats 27 at their centres 28 when the filter element is a backflushable filter element and mounted in a backflush mode. Since the pleats 27 are usually formed around a cylindrical core, the space between the crowns 21 is tapered to a greater extend than the space between the apexes 22. Thus, a wedge-shaped spacer 100 fits tighter into the space between adjacent pleats 27 than a flat shim. It has been satisfactorily ascertained that the wedges 100 positioned between the adjacent outer side surfaces of adjacent pleats 27 prolong the life of backflushable filter element.

In addition to the wedges 100 positioned between the pleats 27 at the outer surface 23 of the media 20 in the filter shown in Figure 12 the shims 101 are positioned within the respective pleats 27 at the inner surface 24 of the media. The metal wire screen 31 performs the same function as the screen 30. The shims 101 support and substantially prevent diaphragmic movement of the pleated media 20 during the regular filtering cycle. With both the wedges 100 and the shims 101, the filter media can be subjected to repeated cleaning cycles with fluids having viscosities of 100 Pa.s (1,000 poise) and even more. It has been found that it is not essential that the wedges 100 or shims 101 be secured to the end caps 11 and 12. However, the wedges 100 and shims 101 must be selected from material that is compatible with the media 20 (and screens 30 and 31 if they are used). In the event that the media 20, screens 30 and 31, wedges 100 and shims 101 are all of the same material or material system, then it is possible that the wedges 100 and/or shims 101 may be secured to either one or both of the end caps by the bonding means 19. By choosing the wedge 100 and/or shim 101 material properly, or by providing special coatings thereon, it is possible to predetermine whether or not the wedge 100 or shim 101 can be or will be secured to the end caps 11 or 12.

Whilst not illustrated in the drawings, the wedges 100 and shims 101 would have holes, grooves, channels etc to enhance the flow around the filter media 20.

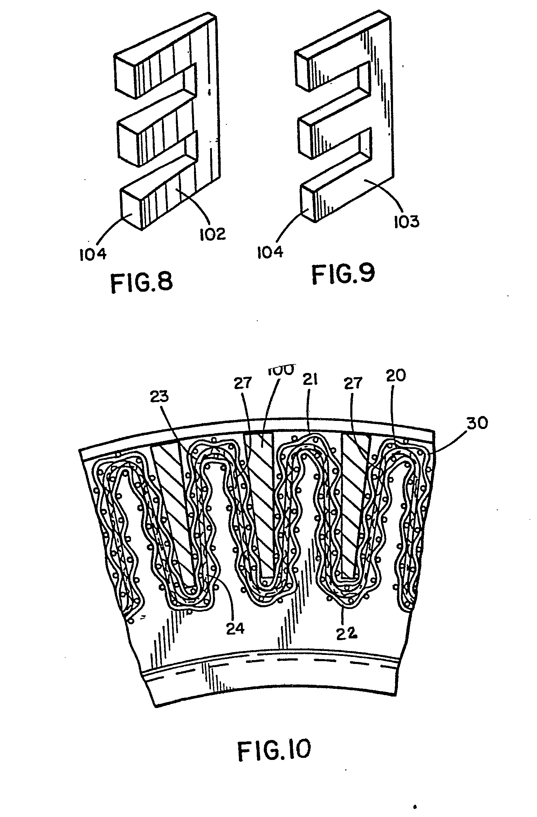

In another embodiment of the invention, shown in Figure 8, an E-shaped wedge 102 is depicted and in Figure 9 an E-shaped shim 103 is depicted. The E-shaped wedge 102 and shims 103 are spacers that can be substituted for the wedges 100 and shims 101 to provide for greater unobstructed flow through the filter. The E-shaped spacers also provide for less pressure drop across the filter element; and, thus, require less energy to force the contaminated fluid through the filter media 20. To make the most efficient use of the E-shaped spacers, the solid vertical segment of the E is closest to the inner portion of the crowns 21 and the apexes 22. The E-shaped spacers are positioned similar to the wedges 100 and shims 101 shown in Figures 10 and 11.

Instead of having three elongated teeth and two spacers therebetween (E-shaped), as shown in Figures 8 and 9, the wedges and shims can have any number of teeth and spaces, as desired. Thus, in other embodiments of the invention comb-like wedges and shims 105, 106 and 107 are shown in Figures 12, 13 and 14 having five teeth and four spaces, six teeth and five spaces, and seven teeth and six spaces. The spaces serve as fluid flow channels. Obviously the number of teeth and the size thereof are determined by the size of the filter element and the characteristics of the fluid to be filtered. For a filter pleat 27 ranging from about 0.0006452 m² (one square inch) to about 0.00129 m² (two square inches), it has been found desirable to have the teeth and spaces each about 0.0016 m (1/16 inch) to 0.0032 m (1/8 inch) wide (dimension "a" in Figure 12). In one preferred embodiment, the teeth and spaces are each 0.00238 m (3/32 inch or 93 mils) wide.

The following filter elements 20 were manufactured with each element having an outside diameter of about 0.2159 m (8 1/2 inches), an inside diameter of about 0.1397 m (5 1/2 inches), a filter media size of about 0.0254 m (1 inch) by 0.0317 m (1 1/4 inch) and the thickness between end caps 11 and 12 of about 0.0349 m (1 3/8 inch). All the end caps of the elements were bonded to the media in accordance with US—A—4,114,794.

Example I

The element had filter media made from a sintered metal fibre web having a thickness of 0.00063 m (25 mils) and a density of approximately 20%. As used herein, the term "density" when applied to the fibre web constituting the filter media means the actual volume occupied by the material of the fibre web compared with the total volume bounded by the surface area of the fibre web. Adjacent the outer surface of the media was a layer of 24×24 wire mesh screen having wires 0.00027 m (11 mils) in diameter. Adjacent the inner layer of the media was a 10×10 screen wire made of a 0.00063 m (25 mil) diameter wire. The element had 108 pleats with a filter media area of 0.1765 m² (1.9 square feet).

Example II

The element had filter media made from a sintered web of metal fibre having a thickness of about 0.00038 m (15 mils) and a density of about 20%. Adjacent the outer surface of the media was a layer of 16×16 metal wire screen made from a wire having a diameter of 0.00045 m (18 mils). Adjacent the inner layer of the media was a 16×16 screen wire material made from wire having an 0.00045 m (18 mil) diameter. The filter element has 120 pleats with a filter media area of 0.1969 m² (2.12 square feet).

Example III

The filter element had filter media from a sintered metal fibre web having a thickness of approximately 0.00038 m (15 mils) and a density of about 20%. Adjacent the outer surface of the media was a layer of expanded metal approximately 30 mils thick and having openings approximately 0.0032 m (1/8 inch)×0.0063 m (1/4 inch). Adjacent the inner layer of the media was a layer of expanded metal approximately 0.00076 m (30 mils) thick and having openings of about 0.0032 m (1/8 inch)×0.0063 m (1/4 inch). This element had 133 pleats with a filter media area of about 0.2173 m² (2.34 square feet).

Example IV

The element had filter media made from a sintered metal fibre web having a thickness of about 0.00038 m (15 mils) and a density of about 20%. There was nothing adjacent the outer surface of the media. Adjacent the inner surface of the media was a layer of expanded metal approximately 0.00076 m (30 mils) thick and having openings of about 0.0032 m×0.0063 m (1/8 inch×1/4 inch). The filter element had 126 pleats and a filter media area of 0.2062 m² (2.22 square feet).

Example V

The element had filter media made from a sintered metal fibre web having a thickness of about 0.00038 m (.015 inches) and a density of approximately 20%. Adjacent the outer surface of the media was a layer of expanded metal approximately 0.00076 m (30 mils) thick and having openings of approximately 0.0032 m (1/8 inch) by 0.0063 m (1/4 inch). Adjacent the inner surface of the media was a layer of expanded metal approximately 0.0076 m (30 mils) thick and having openings approximately 0.0032 m (1/8 inch) by 0.0063 m (1/4 inch). Positioned between the outer pleats was a plurality of E-shaped metal wedges and positioned between the inner pleats was a plurality of E-shaped metal shims. The filter element had 105 pleats with a filter media area of 0.1718 m² (1.85 square feet).

Example VI

The element had filter media made from a sintered metal fibre web having a thickness of 0.0038 m (.015 inches) and a density of approximately 20%. Adjacent the outer surface of the media was a layer of 16×16 wire screen mesh made from 0.0045 m (18 mil) diameter wire. Adjacent the inner surface of the media was a layer of 16×16 wire screen mesh made from 0.00045 m (18 mil) diameter wire. Positioned between the outer pleats was a plurality of E-shaped metal wedges and positioned between the inner pleats was a plurality of E-shaped metal shims. The filter element had 94 pleats with a filter media area of 0.1542 m² (1.66 square feet).

Example VII

The element had filter media made from a sintered metal fibre web having a thickness of approximately 0.00038 m (.015 inches) (X9) and a density of approximately 20%. Adjacent the outer surface of the media was a layer of expanded metal approximately 0.00076 m (30 mils) thick and having openings of approximately 0.0032 m (1/8 inch)×0.0063 m (1/4 inch). Adjacent the inner surface of the media was a layer of expanded metal approximately 0.0076 m (30 mils) thick and having openings approximately 0.0032 m (1/8 inch) by 0.0063 m (1/5 inch). Positioned between the outer pleats was a plurality of E-shaped metal wedges and positioned between the inner pleats was a plurality of E-shaped metal shims. The filter element had 115 pleats with a filter media area of 0.1876 m² (2.02 square feet).

All the Examples were tested in a backflushable unit simulator and subjected to the same cycling flow of silicon oil having a viscosity of about 100 Pa.s (1,000 poise). Each filter element was subjected to a differential pressure of approximately 0.0439 Kg.m (15o psia). The filters were checked periodically to see whether or not there was any splitting at the crowns. If a crown split, it was immediately noted. The following table indicates the results of these tests.

| Example No. | Type | Support | Cycles |
|---|---|---|---|
| I | Prior art | none | 900 |
| II | Prior art | none | 400 |
| III | Prior art | none | 250 |
| IV | Prior art | none | 1,350 |
| V | Expanded metal-E-shaped | ID—OD | 6,000 |
| VI | Screen-E-shaped | ID—OD | 11,000 |
| VII | Screen-E-shaped | ID—OD | 22,000 |

The inventive filter elements perform from around six times to twenty times better than the prior art; preventing the anti-bellowing movement of the media prevents the splitting of the crowns.

**Claims**

1. A backflushable fluid filter comprising:

(a) a pair of spaced end caps (11, 12);
(b) a pleated metal filter media (20) of which the pleats (27) extend axially between the end caps (11, 12) and are secured at their opposite ends thereto, the pleats (27) having inner (24) and outer (23) sides surfaces; and
(c) spacers (100; 101; 102; 103; 105; 106; 107) in the form of wedges (100; 102; 105; 106; 107) or shims (101; 103; 105; 106; 107) mounted between the adjacent outer side surfaces (23) of adjacent media pleats (27), the spacers (100; 101; 102; 103, 105; 106; 107) having elongated teeth with fluid flow spaces therebetween or having fluid flow holes, grooves or channels.

2. A fluid filter as claimed in claim 1, further including second spacers (100; 101; 102; 103; 105; 106; 107) in the form of wedges (100; 102; 105; 106; 107) or shims (101; 103; 105; 106; 107) mounted between the adjacent the inner side surfaces (24) of adjacent media pleats (27), the second spacers (100; 101; 102; 103; 105; 106; 107) having elongated teeth with fluid flow spaces therebetween or having fluid flow holes, grooves or channels.

3. A filter as claimed in claim 1 or claim 2, wherein the spacers (102; 103) have three teeth and two spaces therebetween.

4. A filter as claimed in claim 1 or claim 2, wherein the spacers (102, 103) are E-shaped.

5. A filter as claimed in claim 1 or claim 2, wherein the spacers (105) have five teeth and four spaces therebetween.

6. A filter as claimed in claim 1 or claim 2, wherein the spacers (106) have six teeth and five spaces therebetween.

7. A filter as claimed in claim 1 or claim 2, wherein the spacers (107) have seven teeth and six spaces therebetween.

8. A filter as claimed in any of the preceding claims, wherein the teeth are about 0.00238 m (3/32 inches) apart.

9. A filter as claimed in any of the preceding claims, wherein the filter media (20) is a sintered web of metal fibres.

10. A filter as claimed in claim 9, wherein the metal fibres have a size range from about 0.000001 m (1 micron) to about 0.00005 m (50 microns).

11. A filter as claimed in claim 9 or claim 10, wherein the web has a density range from 10% to 40%.

12. A filter as claimed in any of the preceding claims, further including a porous metal layer (30) immediately adjacent the outer surface (23) of the pleated filter media (20).

13. A filter as claimed in any of the preceding claims, further including a porous metal layer (31) immediately adjacent the inner surface (24) of the pleated filter media (20).

14. A filter as claimed in claim 12 or claim 13, wherein the layer (30; 31) is expanded metal.

15. A filter as claimed in claim 12 or claim 13, wherein the layer (30, 31) is wire screen (30; 31).

16. A filter as claimed in any of claims 12 to 15, wherein the layer (30; 31) provides fluid paths between the spacers (100; 101; 102; 103; 105; 106; 107) and the pleated filter media (20).

**Patentansprüche**

1. Rückflutbaret Fluidfilter mit

a) einem Paar mit Abstand angeordneter Abschlußkappen (11, 12);
(b) einem gefalteten Metallfiltermittel (20), dessen Faltungen (27) axial zwischen den Abschlußkappen (11, 12) verlaufen und mit ihren gegenüberliegenden Enden an diesen befestigt sind, wobei die Faltungen (27) innere (24) und äußere (23) Seitenflächen aufweisen; und

c) Distanzstücken (100; 101; 102; 103; 105; 106; 107) in Form von Keilen (100, 102; 105; 106; 107) oder Distanzscheiben (101; 103; 105; 106; 107), die zwischen die benachbarten äußeren Seitenflächen (23) benachbarter Faltungen (27) des Filtermittels eingesetzt sind, wobei die Distanzstücke (100; 101; 102; 103; 105; 106; 107) längliche Zähne mit dazwischen angeordneten Fluidströmungszwischenräumen oder Fluidströmungslöcher, -rillen oder -kanäle aufweisen.

2. Fluidfilter nach Anspruch 1, der ferner zweite Distanzstücke (100; 101; 102; 103; 105; 106; 107) in Form von Keilen (100; 102; 105; 106; 107) oder Distanzscheiben (101; 103; 105; 106; 107) aufweist, die zwischen die benachbarten inneren Seitenflächen (24) benachbarter Faltungen (27) des Filtermittels eingesetzt sind, wobei die zweiten Distanzstücke (100; 101; 102; 103; 105; 106; 107) längliche Zähne mit dazwischen angeordneten Fluidströmgszwischenräumen oder Fluidströmungslöcher, -rillen oder -kanale aufweisen.

3. Filter nach Anspruch 1 oder Anspruch 2, in welchem die Distanzstücke (102; 103) drei Zähne und zwei dazwischen angeordnete Zwischenräume aufweisen.

4. Filter nach Anspruch 1 oder Anspruch 2, in welchem die Distanzstücke (102; 103) E-förmig sind.

5. Filter nach Anspruch 1 oder Anspruch 2, in welchem die Distanzstücke (105) fünf Zähne und view dazwischen angeordnete Zwischenräume aufweisen.

6. Filter nach Anspruch 1 oder Anspruch 2, in welchem die Distanzstücke (106) sechs Zähne und fünf dazwischen angeordnete Zwischenräume aufweisen.

7. Filter nach Anspruch 1 oder Anspruch 2, in welchem die Distanzstücke (107) sieben Zähne und sechs dazwischen angeordnete Zwischenräume aufweisen.

8. Filer nach irgendeinem der vorhergehenden Ansprüche, in welchem die Zähne ungefähre 0,00238 m (3/32 Zoll) voneinander entfernt sind.

9. Filter nach irgendeinem der vorhergehenden Ansprüche, in welchem das Filtermittel (20) ein gesintertes Material aus Metallfasern ist.

10. Filter nach Anspruch 9, in welchem die Metallfasern eine Größenbereich von ungefähr 0,000001 m (1 Mikron) bis ungefähr 0,00005 m (50 Mikron) aufweisen.

11. Filter nach Anspruch 9 oder Anspruch 10, in welchem das gesinterte Material einen Dichtebereich von 10% bis 40% aufweist.

12. Filter nach irgendeinem der vorhergehenden Ansprüche, der ferner eine unmittelbar der äußeren Fläche (23) des gefalteten Filtermittels (20) benachbarte durchlässige Metallschicht (30) aufweist.

13. Filter nach irgendeinem der vorhergehenden Ansprüche, der weiterhin eine unmittelbar der inneren Fläche (24) des gefalteten Filtermaterials (20) benachbarte durchlässige Metallschicht (31) aufweist.

14. Filter nach Anspruch 12 oder Anspruch 13, in welchem die Schicht (30; 31) Streckmetall ist.

15. Filter nach Anspruch 12 oder Anspruch 13, in welchem die Schicht (30; 31) Drahtsiebmaterial (30; 31) ist.

16. Filter nach irgendeinem der Ansprüche 12—15, in welchem die Schicht (30; 31) Fluidbahnen zwischen den Distanzstücken (100; 101; 102; 103, 105; 106; 107) und dem gefalteten Filtermittel schafft.

**Revendications**

1. Filtre à fluid à lavage par inversion d'écoulement comprenant:

(a) deux chapeaux aux extrêmes espacés (11, 12);

(b) un milieu filtrant métallique plissé (20) dont les plis (27) s'étendent axialement entre les chapeaux extrêmes (11, 12) et leur sont fixés par leurs extrémités opposées, les pils (27) présentant des surfaces latérales intérieures (24) et extérieures (23); et

(c) des entretoises (100; 101; 102; 103; 105; 106; 107) sous la forme de coins (100; 102; 105; 106; 107) ou de cales (101; 103; 105; 106; 107), montées entre les surfaces latérales extérieures adjacentes (23) de plis adjacents (27) du milieu, les entretoises (100; 101; 102; 103; 105; 106; 107) comportant des dents allongées présentant des espaces d'écoulement de fluide entre elles ou ayant des trous, des gorges ou des rainures d'écoulement de fluide.

2. Filtre à fluide selon la revendication 1, comprenant en outre des secondes entretoises (100; 101; 102; 103; 105; 106; 107) sous la forme de coins (100; 102; 105; 106; 107) ou de cales (101; 103; 105; 106; 107) montées entre les surfaces latérales intérieures adjacentes (24) des plis adjacents (27) du milieu, les secondes entretoises (100; 101; 102; 103; 105; 106; 107) comportant des dents allongées présentant des espaces d'écoulement de fluide entre elles ou présentant des trous des gorges ou de rainures d'écoulement de fluide.

3. Filtre selon la revendication 1 ou la revendication 2, dans lequel les entretoises (102; 103) comportent trois dents et deux espaces entre elles.

4. Filtre selon la revendication 1 ou la revendication 2, dans lequel les entretoises (102; 103) sont de forme on E.

5. Filtre selon la revendication 1 ou la revendication 2, dans lequel les entretoises (105) comportent cinq dents et quatre espaces entre elles.

6. Filtre selon la revendication 1 ou la revendication 2, dans lequel les entretoises (106) comportent six dents et cinq espaces entre elles.

7. Filtre selon la revendication 1 ou la revendication 2, dans lequel les entretoises (107) comportent sept dents et six espaces entre elles.

8. Filtre selon l'une quelconque des revendications précédentes, dans lequel les dents sont écartées d'environ 0,00238 m (3/32 inch).

9. Filtre selon l'une quelconque des revendications précédentes, dans lequel le milieu filtrant (20) est une bande frittée de fibres métalliques.

10. Filtre selon la revendication 9, dans lequel les fibres métalliques ont une plage de dimensions d'environ 0,000001 m (1 $\mu$m) à environ 0,00005 m (50 $\mu$m).

11. Filtre selon la revendication 9 ou la revendication 10, dans lequel la bande présente une plage de densités de 10% à 40%.

12. Filtre selon l'une quelconque des revendications précédentes, comprenant en outre une couche métallique poreuse (30) immédiatement adjacente à la surface extérieure (23) du milieu filtrant plissé (20).

13. Filtre selon l'une quelconque des revendications précédentes, comprenant en outre un couche métallique poreuse (31) immédiatement adjacente à la surface intérieure (24) du milieu filtrant plissé (20).

14. Filtre selon la revendication 12 ou la revendication 13, dans lequel la couche (30; 31) est en métal déployé.

15. Filtre selon la revendication 12 ou la revendication 13, dans lequel la couche (30; 31) est une toile métallique (30; 31).

16. Filtre selon l'une quelconque des revendications 12 à 15, dans lequel la couche (30; 31) établit des trajets de fluide entre les entretoises (100; 101; 102; 103; 105; 106; 107) et le milieu filtrant plissé (20).

FIG. 1

FIG. 2

FIG.3

FIG.4

FIG.5

FIG.6

FIG.7

FIG.7A

FIG.8

104    102

FIG.9

104    103

23    27    100    21    27    20

30

24    22

FIG.10

**FIG.11**

**FIG.12**

**FIG.13**

**FIG.14**